(19) Europäisches Patentamt European Patent Office Office européen des brevets

(11) **EP 2 525 284 A1**

(12) **EUROPEAN PATENT APPLICATION**

(43) Date of publication:
**21.11.2012 Bulletin 2012/47**

(51) Int Cl.:
***G06F 7/544*** *(2006.01)*

(21) Application number: **12167401.4**

(22) Date of filing: **09.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.05.2011 GB 201108258**

(71) Applicant: **AptCore Ltd**
**Bristol BS1 5UB (GB)**

(72) Inventors:
• **Styles, Timothy**
  **Bristol, BS1 5UB (GB)**
• **Hutchinson, James**
  **Bristol, BS1 5UB (GB)**

(74) Representative: **Howell, Matthew Dafydd et al**
  **Withers & Rogers LLP**
  **4 More London Riverside**
  **London SE1 2AU (GB)**

(54) **Signal processing apparatus**

(57) The present invention relates to a network of arithmetical logic units in which control signals are used to enable or disable individual units. The invention has the advantages that the same network can evaluate different expressions, the system structure of the group of arithmetic logic units is optimized, the hardware resource consumption is saved and the chip area is reduced, thereby lowering chip cost.

Figure 2

**Description**

Technical Field

The present invention relates to signal processing apparatus.

Background to the Invention

Digital Signal Processing is a key component in many of today's high technology products, such as digital communications equipment and sensor array processors. The performance required from Digital Signal Processors (DSPs) continues to increase while constraints on power and cost remain tight. These requirements are often met by the use of Application Specific Integrated Circuits (ASICs), which are designed to perform core functions efficiently.
DSP devices are typically required to perform matrix math operations, complex arithmetic operations and Fast Fourier Transform (FFT) calculations. These operations are generally performed by a processor, with core functions being performed by an ASIC. Since the ASIC is optimised for a specific function, the constituent arithmetic units cannot easily be reused, leading to a loss in efficiency. It is therefore desirable to simplify reuse of the arithmetic units for different processing tasks. The ability to reuse the design also aids in reducing development time and cost.
DSP circuitry has been developed that implements a group of multipliers and arithmetic units to form a Multiply/ Accumulate (MAC) block, also known as a DSP block. Multiplexers control the connections between the arithmetic units in the DSP block to enable different modes of operation. However, this increase in circuit complexity reduces performance and increases power consumption.

Summary of Invention

According to a first aspect of the present invention there is provided signal processing apparatus comprising a plurality of arithmetic units arranged to implement a first arithmetic function, wherein one or more of the arithmetic units can be enabled or disabled to cause the signal processing apparatus to implement a second arithmetic function.
The signal processing apparatus of the present invention enables application specific hardware to be used efficiently for additional processing tasks by enabling different modes of operation. Reusing the same arithmetic units reduces silicon area and therefore reduces the cost of the DSP component.
Additional modes of operation may be selected by disabling one or more individual arithmetic units such that they output a value of zero. This increases the flexibility of the hardware and saves power when an arithmetic unit is not being used.
One or more of the arithmetic units that can be enabled or disabled may be used as an input to one or more additional arithmetic units.
The signal processing apparatus may further comprise a controller arranged to issue control signals to enable or disable arithmetic units of the signal processing apparatus.
The controller may be configured to issue control signals every instruction cycle of the apparatus, thereby permitting the arithmetic function implemented by the signal processing apparatus to change every instruction cycle.
The one or more of the arithmetic units may be enabled or disabled by a combination of clock gating to input data latches and logic forcing the output to zero.
The signal processing apparatus may further comprise memory means for storing data words, connected to the input and output data paths of the signal processing apparatus. The memory means may be implemented in multiple levels, such as a register file and an addressable memory.
The signal processing apparatus may further comprise memory means for temporarily storing data words between arithmetic units to form a pipeline.
The signal processing apparatus may further comprise memory means for temporarily storing control signals such that a delay is introduced in a control signal path of an arithmetic unit to match a delay in a data path of that arithmetic unit.
The signal processing apparatus may be implemented as one of: a circuit; an integrated circuit; a field programmable gate array (FPGA); an application specific integrated circuit (ASIC); a processor; or a digital signal processor (DSP).
According to a second aspect of the invention there is provided a method of implementing signal processing apparatus, the method comprising providing a plurality of arithmetic units, arranging the plurality of arithmetic units to implement a first arithmetic function and enabling or disabling one or more of the arithmetic units to cause the plurality of arithmetic units to implement a second arithmetic function.
According to a third aspect of the invention there is provided a computer program which, when implemented on appropriately configured processing hardware, implements the method of the second aspect.

Brief Description of the Drawings

Embodiments of the invention will now be described, strictly by way of example only, with reference to the accompanying drawings, of which:

Figure 1 is a schematic representation of a design using an apparatus according to an embodiment of the present invention, as well as a register file, a memory and a controller;

Figure 2 is a schematic illustration of an apparatus according to an embodiment of the invention comprising a network of multipliers, adders and subtracters optimised for complex multiplication, in which control signals are used to disable individual multiplier units;

Figure 3 is a schematic illustration of an apparatus according to an embodiment of the invention comprising a network of multipliers and adders optimised for fixed length FIR filtering, in which control signals are used to disable individual multiplier units;

Figure 4 is a schematic illustration of multiplier unit with a control signal to enable or disable the multiplier unit; and

Figure 5 is a schematic illustration of multiplier unit with a control signal to enable or disable the multiplier unit.

Description of the Embodiments

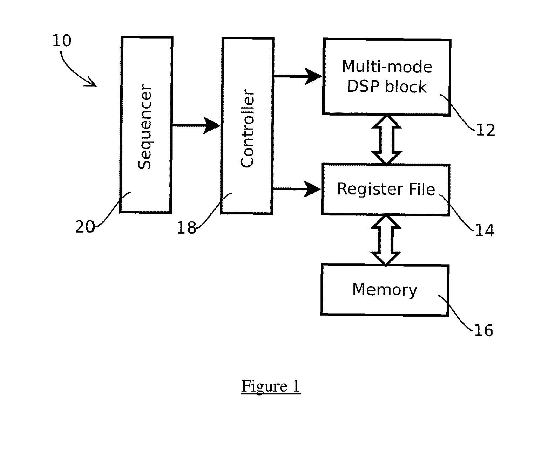

Referring first to Figure 1, a design incorporating apparatus according to an embodiment of the present invention is shown generally at 10, and comprises a multi-mode DSP block 12 having a plurality of arithmetic units such as adders, subtracters and multipliers. The multi-mode DSP block 12 is associated with a register file 14, a memory 16 and a controller 18.

The arithmetic units of the multi-mode DSP block 12 are initially arranged with appropriate interconnections to implement a first arithmetic function, for example a complex multiplication operation. The multi-mode DSP block 12 and register file 14 receive control signals from a controller 18, which may be a microcode controller or any other suitable controller. The control signals issued by the controller 18 can cause one or more of the arithmetic units of the multi-mode DSP block 12 to be disabled such that their outputs are zero. This has the effect of altering the function of the multi-mode DSP block 12 such that the arithmetic units that are enabled are arranged to implement a second, different, arithmetic function, such as a real multiplication function. In this way, some of the arithmetic units of the multi-mode DSP block 12 can be used to perform the second arithmetic function, thereby increasing the flexibility of the DSP block 12, and saving power when an arithmetic unit is not being used.

When it is desired to implement the first arithmetic function, the controller 18 provides control signals to re-enable those of the arithmetic units that were disabled to implement the second arithmetic function, thereby causing the arithmetic units of the multi-mode DSP block 12 to be arranged to implement the first arithmetic function.

It is also possible, where sufficient arithmetic units are provided in the multi-mode DSP block 12, for the controller 18 to provide alternative control signals to enable or disable certain of the arithmetic units such that those of the arithmetic units that are enabled are arranged to perform further different arithmetic functions.

The register file 14 is provided for storage of data words, and connects to the input and output data paths of the multi-mode DSP block 12. For example, the register file 14 may be configured by the controller 18 to supply four values from four registers to four of the data inputs of the DSP block 12, and it may also be configured by the controller 18 to store two values from two outputs of the DSP block 12 to two additional registers. Values that are output and stored in the register file 14 may be used as inputs to the DSP block 12 on subsequent cycles. Values may be transferred between the register file 14 and memory 16 under the control of the controller 18.

The DSP block 12 may include internal registers for temporary storage of data words between arithmetic units of the DSP block 12 so as to form a pipeline. For example, an arithmetic unit that receives inputs from the register file 14 may store the resulting value in an internal register. On the next cycle another arithmetic unit of DSP block 12 may receive the value from the internal register and store the output in the register file 14.

The DSP block may, additionally or alternatively, include internal registers for temporary storage of control signals so that a delay can be introduced into a control signal path of an arithmetic unit of the DSP block 12 to match a delay in a data path of that arithmetic unit of the DSP block 12.

The design 10 may also include a sequencer 20 that issues instructions to the controller 18. The sequencer 20 is configured to generate a sequence of instructions for the arithmetic units of the DSP block 12, which process data stored in the register file 14 and memory 16. The purpose of the sequence of instructions is to implement a high level operation using the DSP block 12 by passing a predetermined sequence of control signals from the controller 18 to the DSP block 12 and the register file 14.

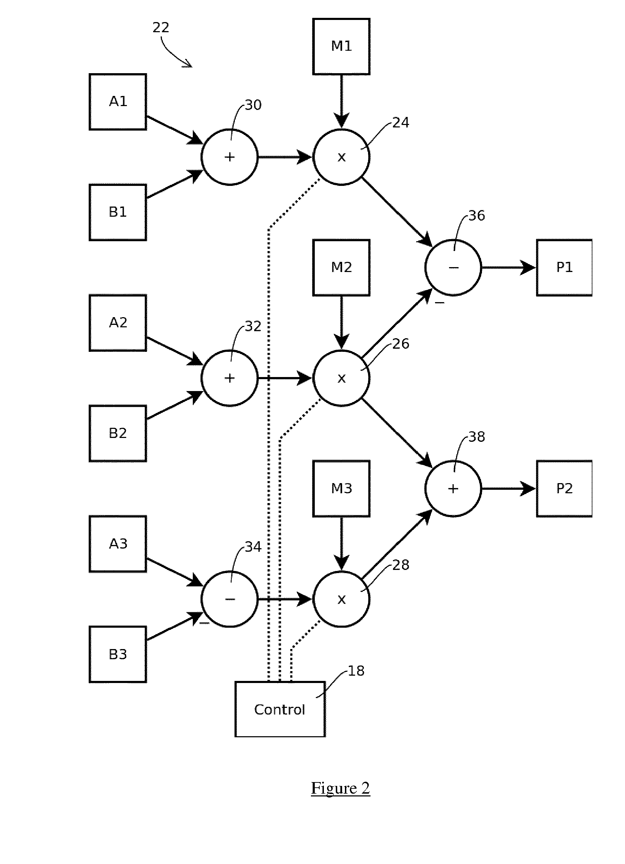

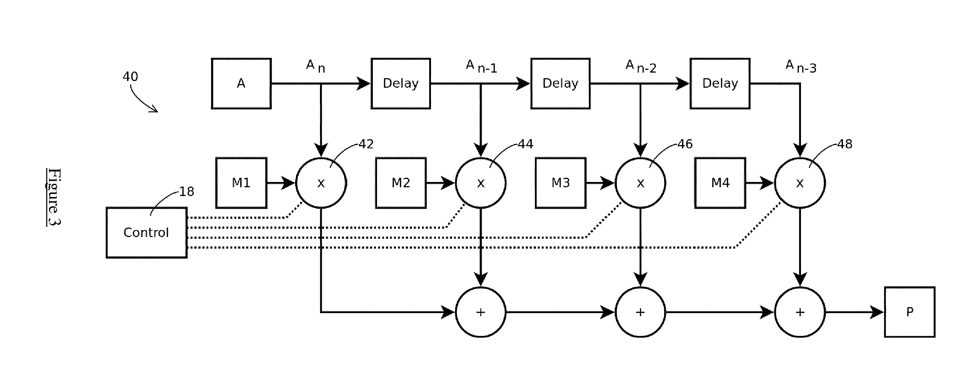

Examples of applications of the design of Figure 1 will now be illustrated by reference to Figures 2 and 3.

Figure 2 is an exemplary signal processing apparatus that is initially configured to perform a complex multiply operation. The complex multiply is a significant operation for most DSP algorithms, including the Fast Fourier Transform (FFT). It can be implemented using various arrangements of multipliers and other arithmetic components. The apparatus comprises a network of arithmetic units, shown generally at 22, including three multipliers 24, 26, 28 and five adders 30, 32, 34, 36, 38. A controller 18 is configured to provide control signals to the multipliers 24, 26, 28 to alter the arithmetic function of the network 22.

The network 22 of multipliers and adders 24, 26, 28, 30, 32, 34, 36, 38 (some of which are configured as subtracters) shown in Figure 2 is optimised for complex multiplication. However, the same hardware can be used for real multiplication and multiply-accumulate operations by use of control signals from the controller 18 which are used to disable individual arithmetic units. The controller 18 may be configured to issue control signals once per instruction cycle, which permits the arithmetic function performed by the apparatus 22 to be altered on a per-instruction basis.

The arrangement illustrated in Figure 2 will be familiar to those skilled in the art as a DSP block implementing the following function:

$$P1 = M1.( A1 + B1 ) - M2.( A2 + B2 )$$

$$P2 = M3.( A3 - B3 ) + M2.( A2 + B2 )$$

The three multiplier units 24, 26, 28 may be disabled individually to change the function of the network and save power. Various functions of the arrangement illustrated in Figure 2 will now be described, but it should be understood that the functions described here do not form a complete list. Those skilled in the art will readily be able to adapt the example network, in the light of this disclosure, to perform specialised tasks.

To implement a complex multiply operation, all three of the multipliers 22, 24, 26 are enabled by control signals issued by the controller 18.

The network 22 of Figure 2 can be used to multiply the complex numbers X and Y when the real and imaginary components of the numbers (Xr, Xi, Yr and Yi) are passed to the inputs as follows:

$$A1 = A3 = Xr \quad B1 = B3 = M2 = Xi$$
$$A2 = M1 = Yr \quad B2 = M3 = Yi$$

This results in a complex multiplier that will be familiar to those skilled in the art, where P1 is the real component and P2 is the imaginary component of the complex product.

$$P1 = Yr.( Xr + Xi ) - Xi.( Yr + Yi ) = Yr.Xr - Xi.Yi$$

$$P2 = Yi.( Xr - Xi ) + Xi.( Yr + Yi ) = Yi.Xr + Xi.Yr$$

To implement a real multiply operation, multiplier 26 is disabled by a control signal issued by the controller 18, forcing the multiplier 26 output to zero. The network 22 can then be used to multiply two pairs of real numbers X1, Y1 and X2, Y2 when they are passed to the inputs as follows:

$$M1 = X1 \quad A1 = Y1$$
$$M3 = X2 \quad A3 = Y2$$

With the multiplier 26 disabled the results from multipliers 24 and 28 pass through the final arithmetic units to the outputs P1 and P2.

$$P1 = X1.( Y1 + 0 ) = X1.Y1$$

$$P2 = X2.(\ Y2 - 0\ ) = X2.Y2$$

To implement a real multiply accumulate operation, multiplier 24 is disabled by a control signal issued by the controller 18, saving power while the multiplier 24 is not used. A further control signal is issued by the controller 18, if necessary, to re-enable the multiplier 26. The network 22 can be used to multiply two pairs of real numbers X1, Y1 and X2, Y2 and accumulate the results when they are passed to the inputs as follows:

M3 = X1    A3 = Y1
M2 = X2    A2 = Y2

With the multipliers 26 and 28 enabled the results from multipliers 26 and 28 are added together by adder 38 and output as P2.

$$P2 = X1.(\ Y1 - 0\ ) + X2.(\ Y2 + 0\ ) = X1.Y1 + X2.Y2$$

This type of operation is useful when multiplying matrices. The resulting accumulated products can be further accumulated by the network on a subsequent pass.
To implement a real multiply subtract operation, multiplier 28 is disabled by a control signal issued by the controller 18, saving power while the multiplier 28 is not used. Further control signals are issued by the controller 18, if necessary, to re-enable the multipliers 24, 26. The network 22 can then be used to multiply two pairs of real numbers X1, Y1 and X2, Y2 and subtract X2.Y2 from X1.Y1 when they are passed to the inputs as follows:

M1 = X1    A1 = Y1
M2 = X2    A2 = Y2

With the multipliers 24 and 26 enabled the result from multiplier 26 is subtracted from the result from multiplier 24 by subtracter 36 and output as P1.

$$P1 = X1.(\ Y1 + 0\ ) - X2.(\ Y2 + 0\ ) = X1.Y1 - X2.Y2$$

To implement a real accumulate operation, multiplier 28 is disabled by a control signal issued by the controller 18, saving power while the multiplier 28 is not used. Further control signals are issued by the controller 18, if necessary, to re-enable the multipliers 24, 26. Input M1 is given a value of 1 and input M2 is given a value of minus 1. The network 22 can then be used to accumulate four real numbers X1, X2, X3 and X3 when they are passed to the inputs as follows:

A1 = X1    B1 = X2
A2 = X3    B2 = X4
M1 = 1     M 2= -1

With the multipliers 24 and 26 enabled the inputs are accumulated in two pairs and multiplier 26 is used to negate one value before the subtracter is used and the result is output as P1.

$$P1 = 1.(\ X1 + X2\ ) - -1.(\ X3 + X4\ ) = X1 + X2 + X3 + X4$$

This type of operation is useful when accumulating the results from a previous pass of multiply/accumulate operations. It does not make good use of the multipliers but allows three accumulate operations in a single pass.
Figure 3 is an exemplary signal processing apparatus that is initially configured to perform a fixed length FIR (Finite Impulse Response) filtering operation. The Finite Impulse Response (FIR) filter is a common operation for many DSP processors. The apparatus comprises a network of arithmetic units, shown generally at 40, including four multipliers 42, 44, 46, 48 and three adders. A controller 18 is configured to provide control signals to the multipliers 42, 44, 46, 48 to alter the arithmetic function of the network 40.

The network 40 of multipliers and adders illustrated in Figure 3 implements the following function:

$$P_n = M1.A_n + M2.A_{n-1} + M3.A_{n-2} + M4.A_{n-3}$$

The four multipliers 42, 44, 46, 48 may be disabled individually to change the function of the network 40 and save power. Various functions will now be described, but it should be understood that the functions described here do not form a complete list. Those skilled in the art will readily be able to adapt the example network 40, in the light of this disclosure, to perform specialized tasks.

To implement a four coefficient FIR filter each of the multipliers 42, 44, 46, 48 is enabled on every instruction cycle, by means of appropriate control signals from the controller 18. The network 40 can then be used to multiply four samples ($A_n$, $A_{n-1}$, $A_{n-2}$, $A_{n-3}$) by four coefficients (M1, M2, M3, M4), accumulate the results and output the filter response:

$$P_n = M1.A_n + M2.A_{n-1} + M3.A_{n-2} + M4.A_{n-3}$$

To implement a variable delay comb filter, multiplier 42 and one of the other multipliers 44, 46, 48 are enabled on every instruction cycle. The network 40 can thus be used to multiply two samples (An) and ($A_{n-1}$, $A_{n-2}$ or $A_{n-3}$) by two coefficients (M1) and (M2, M3 or M4), accumulate the results and output the filter response:

$$\text{e.g. } P_n = M1.A_n + M4.A_{n-3}$$

The delay of the comb filter can be varied without reloading the coefficients, and the disabled multipliers consume less power than if they were enabled with a coefficient value of zero.

To implement a pair of two coefficient FIR filters the multipliers are enabled in two groups, a first containing multipliers 42 and 44, and a second containing multipliers 46 and 48. The network can thus be used to multiply two samples (An, $A_{n-1}$) by two pairs of coefficients (M1, M2) and (M3, M4), accumulate a pair of results and output the response of the two filters at different times.

With the multipliers 42 and 44 enabled, and multipliers 46 and 48 disabled, the value at output P at time n and n+1 is:

$$P_{n+0} = M1.A_n + M2.A_{n-1}$$

$$P_{n+1} = M1.A_{n+1} + M2.A_n$$

With the multipliers 42 and 44 disabled, and multipliers 46 and 48 enabled, the value at output P at time n+2 and n+3 is:

$$P_{n+2} = M3.A_n + M4.A_{n-1}$$

$$P_{n+3} = M3.A_{n+1} + M4.A_n$$

The response of both filters can be calculated without reloading the coefficients, and the disabled multipliers consume less power than if they were enabled with a coefficient value of zero.

Arithmetic units in a DSP block 12 may include one or more known optimizations such as the Booth encoder, the Wallace tree or the Carry save method.

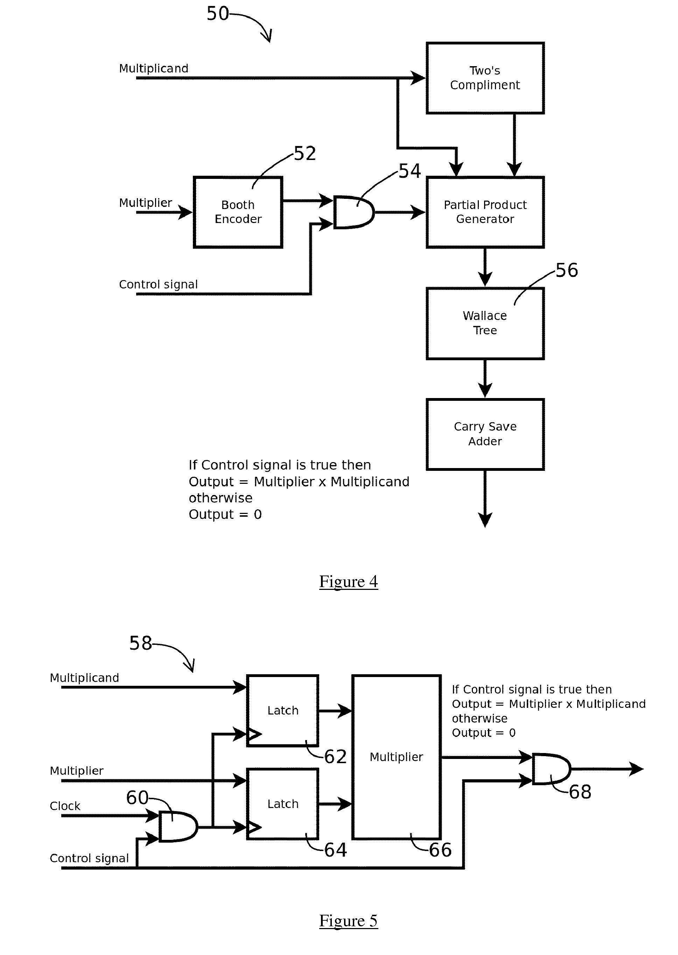

A first example of how a multiplier may be disabled is given in Figure 4, in which the output of a Booth encoder 52 is forced to zero by the use of an array of logic AND gates 54, which each take the control signal as an input. Partial products passed to a Wallace tree 56 are forced to zero, as is the output of the arithmetic unit. If the control signal keeps the arithmetic unit in a disabled state then the dynamic power consumed by the arithmetic unit is reduced and the output remains zero.

A second example of how a multiplier may be disabled is given in Figure 5. A clock signal driving input data latches 62, 64 of the multiplier 66 is inhibited by a control signal by the use of a logic AND gate 60, and the output of the arithmetic unit is forced to zero by the use of an array of logic AND gates 68, which each take the control signal as an input. Thus, in this example the multiplier 66 is disabled by clock gating to the input data latches 62, 64, and by forcing the output to zero. The dynamic power consumed by the arithmetic unit is reduced since changes to the inputs do not affect the state of the arithmetic unit.

It should be understood that the designs illustrated in Figures 4 and 5 are merely examples of ways of disabling an arithmetic unit, and that various ways to disable an arithmetic unit such that the output is zero exist. Therefore the invention is not limited to any particular way of disabling an arithmetic unit.

It will be appreciated that the present invention enables application specific hardware to be used efficiently for additional processing tasks by enabling different modes of operation. Reusing the same arithmetic units reduces silicon area and therefore reduces the cost of the DSP component.

The additional modes of operation are selected by disabling one or more individual multipliers and arithmetic units such that they output a value of zero. This increases the flexibility of the hardware and saves power when an arithmetic unit is not being used. The method used to disable individual arithmetic units may include control signals generated by a microcode controller, or any suitable circuitry and any suitable control signals.

The invention has been described in this specification in terms of DSP blocks and arithmetic units. It will be appreciated that the invention may be implemented in many different ways, for example using Application Specific Integrated Circuits (ASICs), Field Programmable Gate Arrays (FPGAs), bespoke Integrated Circuits (ICs) or Digital Signal Processors (DSPs), or even using discrete components such as transistors, capacitors and the like. The invention may also be implemented as software running on a suitably configured processor.

**Claims**

1. Signal processing apparatus comprising a plurality of arithmetic units arranged to implement a first arithmetic function, wherein one or more of the arithmetic units can be enabled or disabled to cause the signal processing apparatus to implement a second arithmetic function.

2. Signal processing apparatus according to claim 1 wherein disabling an arithmetic unit comprises causing its output to be zero.

3. Signal processing apparatus according to claim 1 wherein one or more of the arithmetic units that can be enabled or disabled is used as an input to one or more additional arithmetic units.

4. Signal processing apparatus according to any of the preceding claims further comprising a controller arranged to issue control signals to enable or disable arithmetic units of the signal processing apparatus.

5. Signal processing apparatus according to claim 4 wherein the controller is configured to issue control signals every instruction cycle of the apparatus, thereby permitting the arithmetic function implemented by the signal processing apparatus to change every instruction cycle.

6. Signal processing apparatus according to any one of the preceding claims wherein the one or more of the arithmetic units is enabled or disabled by use of clock gating to input data latches.

7. Signal processing apparatus according to any one of the preceding claims further comprising memory means for storing data words, connected to the input and output data paths of the signal processing apparatus.

8. Signal processing apparatus according to any one of the preceding claims further comprising memory means for temporarily storing data words between arithmetic units to form a pipeline.

9. Signal processing apparatus according to any one of the preceding claims further comprising memory means for temporarily storing control signals such that a delay is introduced in a control signal path of an arithmetic unit to match a delay in a data path of that arithmetic unit.

10. Signal processing apparatus according to any one of the preceding claims, wherein the apparatus is implemented as one of: a circuit; an integrated circuit; a field programmable gate array (FPGA); an application specific integrated circuit (ASIC); a processor; or a digital signal processor (DSP).

11. A method of implementing signal processing apparatus, the method comprising providing a plurality of arithmetic units, arranging the plurality of arithmetic units to implement a first arithmetic function and enabling or disabling one or more of the arithmetic units to cause the plurality of arithmetic units to implement a second arithmetic function.

12. A computer program which, when implemented on appropriately configured processing hardware, implements the method of claim 11.

10

Sequencer

20

Controller

18

Multi-mode
DSP block

12

Register File

14

Memory

16

Figure 1

Figure 2

Figure 3

50

Multiplicand ─────────────────────────────────────────►┌─────────────┐
                                                         │   Two's     │
                                                         │ Compliment  │
                                                         └─────────────┘
52                                                              │
54                                                              ▼
Multiplier ──►┌──────────┐         ┌─────────────┐
              │  Booth   │───►╲     │   Partial Product   │
              │ Encoder  │    ╱──►  │     Generator       │
              └──────────┘───►╲     └─────────────┘
                                                              │
Control signal ──────────────►                                ▼
                                                    56
                                         ┌─────────────┐
                                         │   Wallace   │
                                         │    Tree     │
                                         └─────────────┘
                                                │
                                                ▼
                                         ┌─────────────┐
If Control signal is true then           │ Carry Save  │
Output = Multiplier x Multiplicand       │   Adder     │
otherwise                                └─────────────┘
Output = 0                                      │
                                                ▼

Figure 4

58

Multiplicand ──────────────────►┌──────┐
                                 │Latch │───►┌──────────┐
                                 │      │    │          │   If Control signal is true then
                              ┌─►│      │    │          │   Output = Multiplier x Multiplicand
                              │  └──────┘    │          │   otherwise
                              │       62     │Multiplier│   Output = 0
Multiplier ──────────────────►┌──────┐       │          │───►╲
                              │Latch │───►   │          │    ╱──►
Clock ──►╲                 ┌─►│      │    │          │──►╲
60       ╱──────────────┤  │  └──────┘    └──────────┘
      ──►╲              │  │       64            66
Control signal ─────────┴──┘                                68

Europäisches
Patentamt
European
Patent Office
Office européen
des brevets

**EUROPEAN SEARCH REPORT**

Application Number

EP 12 16 7401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/186870 A1 (DHONG SANG HOO [US] ET AL) 23 September 2004 (2004-09-23)<br>* abstract *<br>* paragraph [0006]; figures 2,3 *<br>* paragraph [0014] - paragraph [0029] *<br>* paragraph [0040] - paragraph [0042] *<br>* claim 1 * | 1-12 | INV.<br>G06F7/544 |
| X | WO 03/048921 A1 (ANALOG DEVICES INC [US]) 12 June 2003 (2003-06-12)<br>* abstract *<br>* page 12, line 17 - page 15, line 5 *<br>* claims 1,2,6 *<br>* figures 2,4,6 * | 1-12 | |
| X | WO 97/14090 A1 (CHROMATIC RES INC [US]) 17 April 1997 (1997-04-17)<br>* abstract *<br>* page 1, line 2 - line 3 *<br>* page 3, line 5 - line 21 *<br>* page 4, line 14 - line 23 *<br>* page 5, line 16 - line 21 *<br>* page 6, line 34 - page 8, line 29 *<br>* claim 1 *<br>* figures 2,7,9 * | 1-12 | TECHNICAL FIELDS SEARCHED (IPC)<br><br>G06F |
| A | WO 01/40934 A1 (SONY ELECTRONICS INC [US]) 7 June 2001 (2001-06-07)<br>* abstract *<br>* claim 6 *<br>* figure 7 * | 1-12 | |

The present search report has been drawn up for all claims

| Place of search | Date of completion of the search | Examiner |
|---|---|---|
| The Hague | 27 July 2012 | Post, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                EP 12 16 7401

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2012

| Patent document cited in search report | | Publication date | Patent family member(s) | | Publication date |
|---|---|---|---|---|---|
| US 2004186870 | A1 | 23-09-2004 | NONE | | |
| WO 03048921 | A1 | 12-06-2003 | CN | 1608244 A | 20-04-2005 |
| | | | EP | 1456745 A1 | 15-09-2004 |
| | | | JP | 4732688 B2 | 27-07-2011 |
| | | | JP | 2005512184 A | 28-04-2005 |
| | | | JP | 2011146052 A | 28-07-2011 |
| | | | WO | 03048921 A1 | 12-06-2003 |
| WO 9714090 | A1 | 17-04-1997 | AU | 7384696 A | 30-04-1997 |
| | | | EP | 0870225 A1 | 14-10-1998 |
| | | | US | 5751622 A | 12-05-1998 |
| | | | WO | 9714090 A1 | 17-04-1997 |
| WO 0140934 | A1 | 07-06-2001 | AU | 2053901 A | 12-06-2001 |
| | | | US | 6282556 B1 | 28-08-2001 |
| | | | WO | 0140934 A1 | 07-06-2001 |

EPO FORM P0459

For more details about this annex : see Official Journal of the European Patent Office, No. 12/82